# EUROPÄISCHE PATENTSCHRIFT

(11) **EP 2 562 773 B1**
(45) Veröffentlichungstag und Bekanntmachung des Hinweises auf die Patenterteilung: **30.09.2020**
(21) Anmeldenummer: 12179648.6
(22) Anmeldetag: 08.08.2012
(51) Int. Cl.: H01F 7/127, H01F 7/13, H01F 7/16, H01F 7/08

(54) **Hydraulisches Getriebeventil**
Hydraulic transmission valve
Soupape hydraulique pour transmissions

(30) Priorität: 26.08.2011 DE 102011053023
(43) Veröffentlichungstag der Anmeldung: 27.02.2013
(73) Patentinhaber: Hilite Germany GmbH, 97828 Marktheidenfeld (DE)
(72) Erfinder: Knecht, Andreas, 72127 Kusterdingen (DE); Boban, Drazen, 72622 Nürtingen (DE); Franz, Bernd, 70567 Stuttgart (DE); Jacob, Thomas, 70199 Stuttgart (DE); Maisch, Dieter, 72664 Kohlberg (DE); Weber, Hartmut, 72655 Altdorf (DE)

(56) Entgegenhaltungen:
- WO-A1-2011/035847
- WO-A1-2011/090256
- FR-A1- 2 370 347
- GB-A- 2 257 566
- JP-A- 2005 310 838
- US-A1- 2010 127 197
- US-B2- 6 806 802

## Beschreibung

Die Erfindung betrifft ein hydraulisches Getriebeventil gemäß dem Oberbegriff des Patentanspruchs 1.

Aus der DE 198 08 279 A1 ist bereits ein hydraulisches Ventil bekannt. Das Ventil weist ein Kunststoffgehäuse auf. Dieses Kunststoffgehäuse ist um eine magnetisch leitende Einsatzbuchse gespritzt. In die Kombination aus Kunststoffgehäuse und Einsatzbuchse ist ein Polkern mit einem Polkernkonus eingesetzt. In die Einsatzbuchse ist ein als Boden bezeichnetes Kunststoffteil eingesetzt, welches um einen Topfboden eines topfförmigen Polrohrs gespritzt ist. Auf das Polrohr ist im Bereich des Topfbodens ein scheibenförmiger Polflansch aufgesetzt. In dem Polrohr ist ein Anker axial verschiebbar angeordnet. In den Anker ist ein Kolben eingesetzt, der in einer Hydraulikbuchse geführt ist, die einteilig mit dem Polkern ausgeführt ist.

Aus der DE 10 2009 042 888 A1 ist bereits ein Proportionalventil bekannt, dessen als Steuerkonus bezeichneter Polkernkonus eine Trompetenform aufweist. Das als Stahlhülse bezeichnete Polrohr weist eine Trennschicht auf, die ein Gleitlack, PTFE oder eine Nickel-PTFE-Beschichtung sein kann.

Der US 6,806,802 B2 ist ein hydraulisches Hydraulikventil mit einem topfförmigen Gehäuse zu entnehmen, welches ein Polgehäuse und eine Spule umschließt und mit einer Hydraulikbuchse verbunden ist. Dabei ist das Polgehäuse mit einem Polkern einteilig ausgeführt und weist ebenso wie ein Anker eine nichtmagnetische Schicht auf, wobei zwischen den beiden Schichten eine radiale Luftschicht vorgesehen ist.

Die US 2010/0127197 A1 offenbart ein Hydraulikventil, bei welchem zur Verringerung der Reibung und der Hysterese ein Anker oder ein Polrohr eine Folienstruktur in Hülsenform und ein einteiliges mit dem Polkernkonus ausgebildetes Polrohr aufweist. Aufgabe der Erfindung ist es, ein Getriebeventil für komfortabel reibschlüssig zu koppelnde Getriebekupplungen - insbesondere Anfahr-/Schaltkupplungen oder Synchronisierungen - zu schaffen, das eine verbesserte Hysterese und damit eine hohe Regelgüte aufweist. Gleichzeitig soll der Verschleiß vermindert werden.

Diese Aufgabe wird erfindungsgemäß mit den Merkmalen von Patentanspruch 1 gelöst.

Um bei großen Getriebeölwechselintervallen - Extremfall Lebensdauerfüllung - dennoch ausfallsicher zu sein, muss das Getriebeventil eine hohe Robustheit aufweisen. Hohe Robustheit lässt sich zwar mit einem großen Spiel bei den zu bewegenden Teilen erzielen. Jedoch geht das zu Lasten der Regelgüte.

Das erfindungsgemäße Getriebeventil erfüllt diese widerstrebenden Ziele indem es eine hohe Robustheit neben einer hohen Regelgüte aufweist. Die hohe Robustheit wird erreicht, indem Schmutzpartikel im Hydrauliköl nicht zum Verklemmen des Getriebeventils kommen können, da der Anker so große Axialkräfte aufbringen kann, dass dieser sich stets frei reißen kann.

Das Getriebeventil weist dennoch eine hohe Regelgüte auf, die mittels mehrerer konstruktiver Maßnahmen erreicht wird. So werden insbesondere die Querkräfte zwischen dem Anker und einem Polrohr minimiert.

Ein solches konstruktives Merkmal zur Verringerung der Querkräfte ist ein sehr enges Laufspiel zwischen dem Anker und dem Polrohr, das mittels einer sehr dünnen Trennschicht anstelle beispielsweise einer Hülse oder einer dicken Beschichtung erreicht wird. Eine solche sehr dünne Trennschicht liegt bei einer Schichtdicke von 0,01 mm bis 0,06 mm. Die dünne Trennschicht kann beispielsweise chemisch oder galvanisch erreicht werden. Als chemisches Verfahren kann beispielweise das chemische vernickeln Anwendung finden. Hier hat sich eine Schichtdicke von 0,045 mm als ideal erwiesen. Die Mindestdicke von 0,01 mm ist theoretisch machbar. Mit den derzeitigen vorhandenen Verfahren hat sich eine Schichtdicke ab 0,02 mm als machbar erwiesen. Im Gegensatz beispielsweise zur galvanischen Vernickelung wird beim chemischen Verfahren keine Spannung über Elektroden angelegt. Die Schichtdicke ist bei der chemischen Vernickelung sehr homogen.

Der Anker kann an dessen Mantelfläche - d.h. der Lauffläche - beschichtet sein. Die chemische Vernickelung bietet dabei einen hohen Verschleiß und Korrosionsschutz. Alternativ kann auch das Polrohr innen beschichtet sein.

Ist das Polrohr dergestalt, dass es einen magnetisierbaren Boden aufweist, der unmittelbar an dem Anker zum anliegen kommt, so ist zur Verhinderung des magnetischen Klebens auch dort eine Trennungsmaßnahme durchzuführen. Diese Trennungsmaßnahme kann die gleiche Trennschicht sein, wie die Trennschicht an der Mantelfläche. Demzufolge kann auch die hintere Stirnfläche des Ankers oder der innenseitige Boden des Polrohrs galvanisch oder chemisch beschichtet sein.

Zur Herstellung eines proportionalen Verhaltens des Getriebeventils ist ein Polkernkonus vorgesehen. Mit einem solchen Polkernkonus sind aber auch verschiedene andere Kraft/Weg-Verläufe realisierbar. Der linearer Kraft/Weg-Verlauf ist jedoch zur Vereinfachung der Regelung zumeist gewünscht.

Infolge des geringen und überdies gleichmäßigen Abstands zwischen dem Polrohr und dem Anker entstehen wenig Kippmomente auf den Anker und dieser weist damit nur wenig Querkräfte auf, die ansonsten die Reibung und damit die weiter und im Ausführungsbeispiel erläuterte Hysterese Δp vergrößern würden.

Um die Querkräfte gering zu halten, muss auch der Polkernkonus sehr konzentrisch zum Anker und zum Polrohr ausgerichtet sein. Dafür sieht die Erfindung vor, dass der Polkernkonus und das Gehäuse gemeinsam einteilig aus magnetisierbaren Metall gefertigt sind. Überdies weist das Gehäuse eine Verbindung auf, in dem ein magnetisierbarer Polflansch des Polrohrs abgestützt ist. Diese Verbindung legt einen Ankerhub des Ankers und eine Konzentrizität zwischen dem Polkernkonus und dem Polrohr fest.

Um in einer vorteilhaften Ausgestaltung den Ankerhub genau zu definieren, kann der Polflansch zur axialen Passung eine Stirnfläche aufweisen, die an einer Anlagefläche des Gehäuses anliegt.

Zur Sicherstellung der Konzentrizität zwischen dem Polrohr und dem Polkernkonus kann der Polflansch eine radiale Passung aufweisen.

Die radiale und die axiale Passung sind auch in einer gemeinsamen Passung zusammenführbar. Beispielsweise kann der Polflansch radial außen konisch ausgestaltet sein, so dass sich eine konische Verbindungsstelle zum Gehäuse ergibt. In diesem Fall ist die Einstellung des Ankerhubes jedoch mit mehr Aufwand verbunden.

Das Polrohr ist in jedem Fall bewegungsfest verbunden mit dem Polflansch. Insbesondere kann der magnetisierbare Polflansch einteilig mit dem Polrohr sein. Es ist jedoch beispielsweise auch möglich, den Polflansch als Scheibe auszuführen und auf das Polrohr aufzupressen. Im Anschluss kann die Baueinheit aus Scheibe und Polflansch abgedreht oder abgeschliffen werden. Somit bestimmt alleinig oder zumindest im weit überwiegenden Maße die Verbindung zwischen dem Gehäuse und dem Polflansch die Koaxialität zwischen dem Polrohr und dem Polkernkonus. Ist dieser Verbindungsprozeß wiederholbar gut mit kleinen Toleranzen, so sind auch Polrohr und Polkernkonus koaxial bzw. fluchtend zueinander in großen Stückzahlen zu produzieren. Der im Polrohr geführte Anker lässt sich in den Polkernkonus hinein verschieben, ohne dass Querkräfte diese Verschiebung mit Reibung belasten.

Damit es unter keinen Umständen zum Verkanten oder zur Reibung zwischen dem Anker und dem Polkernkonus kommen kann, kann zusätzlich der Innendurchmesser des Polkernkonus größer ausgeführt sein, als der Innendurchmesser des Polrohrs.

Zwischen dem Polkernkonus und dem Polrohr kann noch eine Hülse vorgesehen sein. Diese kann zwar mit einer zentrierenden Funktion ausgeführt sein. Dann müsste sie aber entsprechend dick ausgeführt sein. Da erfindungsgemäß jedoch die Verbindung zwischen Gehäuse und Polflansch die Koaxialität zwischen Polrohr und Polkernkonus sicher stellt, kann entweder auf eine solche Hülse verzichtet werden oder eine solche Hülse ist derart dünn ausgeführt, dass sie keine zentrierende Wirkung hat. Keine zentrierende Wirkung bedeutet, dass die bei der Montage an der besagten Verbindung zwischen Gehäuse und Polflansch eingeleiteten Kräfte so groß sind, dass der Montageprozeß die dünne Hülse bei Fluchtungsfehlern ohnehin verformen würde. Die Funktion einer solchen dünnen Hülse ist dann die, den Raum innerhalb der Hülse gegenüber dem Raum außerhalb der Hülse abzudichten. Innerhalb der Hülse wird der Anker im Hydrauliköl verschoben. Außerhalb der Hülse ist die Spule zur Verschiebung des Ankers vorgesehen. Diese Spule befindet sich je nach Ausführung des Getriebeventils in Luft, in Hydrauliköl oder in einem Luft-/Hydrauliköl-Gemisch. Damit kann die Hülse verwendet werden, um den Elektromagnetteil vor dem Hydrauliköl zu schützen. Hydrauliköl kann nicht an den Kontakten zu den elektrischen Leitungen austreten.

Doch auch bei den in den Ausführungsbeispielen dargestellten Getriebeventilen, deren Elektromagnetteile ohnehin im Hydrauliköl liegen, kann eine solche Hülse Sinn machen. Die Funktion der Hülse ist es dann, Lufteinschlüsse im Hydrauliköl innerhalb des Elektromagnetteils zu minimieren. Solche Lufteinschlüsse könnten ansonsten die hydraulische Dämpfung beim hin und her Schieben des Ankers negativ beeinflussen. Die Hülse dichtet
- den Raum außerhalb der Hülse und
- einen Ringraum axial zwischen dem Polkernkonus und dem Polrohr zwar nur sehr unzureichend gegen ein Durchfließen von Hydrauliköl ab. Jedoch verhindert die Hülse, dass sich bei Erstbefüllung des Elektromagnetteils mit Hydrauliköl durch die Querbohrung Luft innerhalb der Hülse sammeln kann. Solche Luft kann sich nämlich um die Spule herum bilden und wird aber mittels der Hülse außen gehalten. Damit kann auch die Erstprüfung des Getriebeventils mit realistischen Umgebungsbedingungen und damit einer realistischen Dämpfung durchgeführt werden.

Eine hydraulische Dämpfung ist nämlich für die Regelbarkeit des Getriebeventils wichtig. Gleichzeitig muss das Hydrauliköl für die Verschiebbarkeit des Ankers zwischen den beiden Räumen axial vor und hinter dem Anker hin und her geschoben werden können. Dazu ist ein hydraulischer Durchgang zwischen den beiden axialen Stirnflächen des Ankers vorgesehen. Dieser Durchgang umfasst eine zentrische Ausnehmung im Anker, der infolge von deren Zentrizität die Querkräfte gering hält. Überdies kann in einer besonders vorteilhaften Ausgestaltung im Bereich dieses Durchgangs eine Drosselblende vorgesehen sein. Eine solche kurze Drosselblende ermöglicht im Verhältnis zu langen Bohrungen eine relativ temperaturunabhängige Festlegung der hydraulischen Dämpfung. Die Drosselblende kann in besonders vorteilhafter Weise in einer nicht magnetisierbare Antiklebscheibe integriert sein. Infolge der nicht-Magnetisierbarkeit der Antiklebscheibe gibt es keine Querkräfte, selbst wenn die Drosselblende exzentrisch - d.h. außerhalb der Längsachse des Ankers - angeordnet ist. Die exzentrische Anordnung der Drosselblende ist dabei von Vorteil, da die Antiklebscheibe somit zentrisch geschlossen sein kann und eine zentrale Anlagefläche für einen Stößel bilden kann. Somit lässt sich der zentrische Durchgang im Anker für die zentrische Anlage des Stößels schließen. Mit dem Stößel ist der Hydraulikteil betätigbar. Der Stößel kann in besonders vorteilhafter Weise einteilig mit einem Hydraulikkolben ausgeführt sein.

Um hohe Axialkräfte des Ankers zu bewirken, ist in besonders vorteilhafter Weise eine Hydraulikbuchse des Getriebeventils magnetisierbar und bildet gemeinsam mit dem Polkernkonus den Polkern.

Das Polrohr kann zur positiven Beeinflussung des Kraft/Weg-Verlauf analog dem Polkern mit einem Polrohrkonus ausgeführt sein.

Weitere Vorteile der Erfindung gehen aus den weiteren Patentansprüchen, der Beschreibung und der Zeichnung vor.

Die Erfindung ist nachfolgend anhand von zwei Ausführungsbeispielen in der Zeichnung näher erläutert:
Dabei zeigen:
Fig. 1 ein hydraulisches Getriebeventil in einer Grundstellung,
Fig. 2 das hydraulisches Getriebeventil in einer Regelstellung,
Fig. 3 das hydraulisches Getriebeventil in einer Anschlagstellung,
Fig. 4 in einem Diagramm für das Getriebeventil gemäß Fig. 1 bis Fig. 3 einen hydraulischen Druck am Arbeitsanschluss über eine Stromstärke I aufgetragen,
Fig. 5 in einem Diagramm für die Anwendung des Getriebeventils gemäß Fig. 1 bis

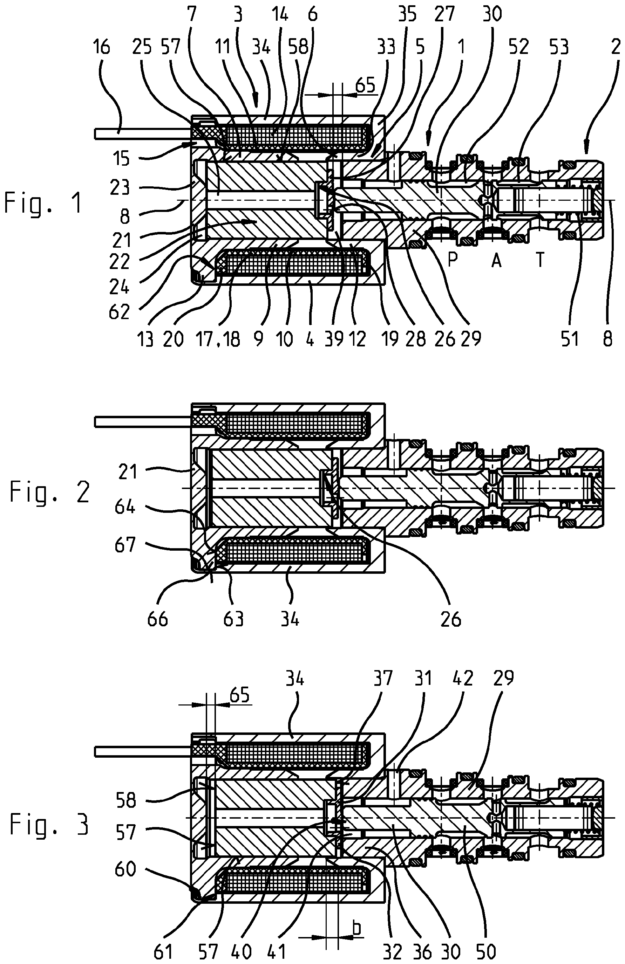

Fig. 3 bei einer Lamellenkupplung die Anpresskraft der Lamellenkupplung über den Weg der Lamellenkupplung aufgetragen,

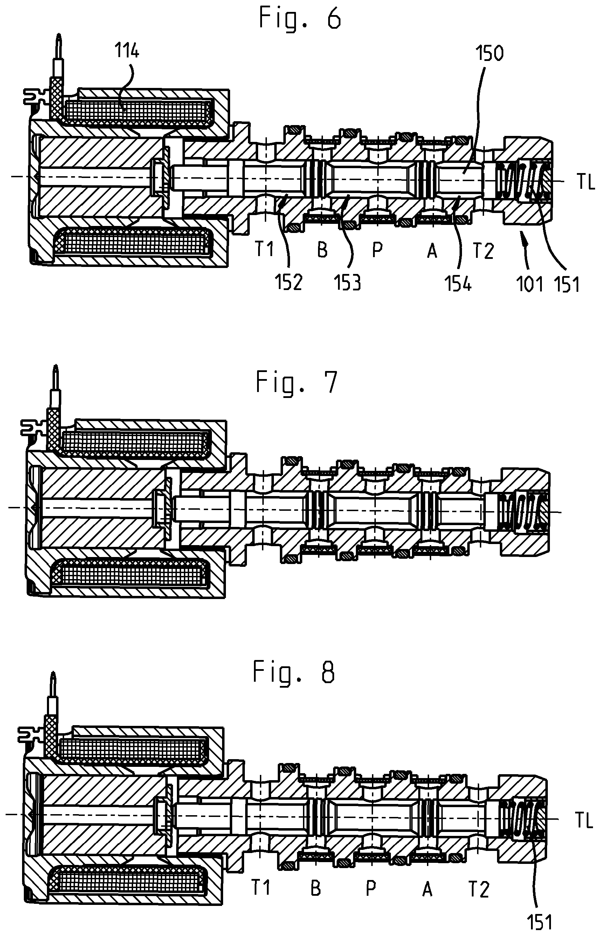

Fig. 6 in einer weiteren Ausführungsform ein hydraulisches Getriebeventil in einer Grundstellung,
Fig. 7 das hydraulisches Getriebeventil gemäß Fig. 6 in einer Regelstellung und
Fig. 8 das hydraulisches Getriebeventil gemäß Fig. 6 in einer Anschlagstellung.
Fig. 1 zeigt ein hydraulisches Getriebeventil 1 in einer Grundstellung. Dabei handelt es sich um ein Druckregelventil.

Dieses Getriebeventil 1 findet Einsatz in einem Doppelkupplungsgetriebe. Das Getriebeventil 1 steuert die Doppelkupplung. Dazu sind Hydraulikbuchsen 29 von Hydraulikteilen 2 mehrerer in Teilen ähnlich aufgebauter Getriebeventile in eine Steuerplatte des Doppelkupplungsgetriebes eingesetzt. Die Hydraulikbuchsen 29 sind als Drehteile ausgeführt. Mit den Hydraulikteilen 2 jeweils verbundene Elektromagnetteile 3 der Getriebeventile 1 ragen aus der Steuerplatte heraus und sind von Öl umspült. Jedes der Elektromagnetteile weist ein magnetisch leitendes Gehäuse 4 auf. Dieses Gehäuse 4 ist einteilig mit einem Polkernkonus 5 ausgeführt. Zu diesem Polkernkonus 5 führt ein Ringsteg 33. Der Ringsteg 33 erstreckt sich koaxial zu einer Längsachse 8 des Getriebeventils 1 in die auf die Mitte des Elektromagnetteils 3 weisende Richtung. Der Polkernkonus 6 steht im Wesentlichen spiegelsymmetrisch einem Polrohrkonus 9 eines Polrohrs 7 gegenüber. Eine diesbezügliche imaginäre Spiegelebene verläuft dabei senkrecht zur Längsachse 8. Das Polrohr 7 ist als Drehteil ausgeführt. Das Gehäuse 4 ist vorgeschmiedet und im Anschluss gedreht.

Eine magnetisch nicht leitende Hülse 10 ist einerseits auf den Ringsteg 33 und andererseits auf das Polrohr 7 gesetzt. Infolge der Dünnwandigkeit der Hülse 10 zentriert diese nicht. Die notwendige Zentrierung des Polkernkonus 6 gegenüber gegen dem Polrohr 7 erfolgt stattdessen über eine Verbindung 62 am Gehäuse 4. Für die Aufnahme der Hülse 10 weisen sowohl das Polrohr 7 als auch der Ringsteg 33 radial außen abgedrehte Bereiche 11, 12 auf.

Am hinteren Teil des Elektromagnetteils 3 erstreckt sich vom Polrohr 7 ein Polflansch 13 radial nach außen, der einteilig mit dem Polrohr 7 ausgeführt ist. Das Gehäuse 4 ist um diesen Polflansch 13 herum gebördelt, so dass der Polflansch 13 axial in beiden Richtungen am Gehäuse 4 abgestützt ist. Demzufolge bildet sich dort die Verbindung 62. Diese Verbindung 62 legt einen Ankerhub 65 fest. Überdies legt diese Verbindung 62 eine Konzentrizität zwischen dem Polkernkonus 6 und dem Polrohr 7 fest.

Die Verbindung 62 weist eine axiale Passung 61 und eine radiale Passung 60 auf. Der Polflansch 13 weist zur axialen Passung 61 eine Stirnfläche 63 auf, die an einer senkrecht zur Längsachse 8 des Getriebeventils 1 ausgerichteten Anlagefläche 64 des Gehäuses 4 anliegt. Der Polflansch 13 weist zur radialen Passung 60 eine Mantelfläche 66 auf. Der Polflansch 13 ist dazu in eine zylindrische Ausnehmung 67 des Gehäuses 4 eingesetzt.

Die Anlagefläche 64 des Gehäuses 4 muss im hohen Maße rechtwinklig gegenüber der Längsachse 8 des Gehäuses 4 sein. Ebenso muss die Stirnfläche 63 des Polflansches 13 im hohen Maße rechtwinklig gegenüber der Längsachse 8 des Polrohrs 7 sein. Die Längsachsen 8 des Polrohrs 7 und des Gehäuses 4 fallen im dargestellten montierten Zustand zusammen.

Der Polflansch 13 weist Ausnehmungen 15 auf, durch welche elektrische Leitungen 16 zum Anlegen einer Spannung an eine Spule 14 geführt sind. Diese Spule 14 ist radial innen von einem Trägerkörper 17 aus Kunststoff begrenzt. Der Trägerkörper 17 weist dabei ein u-förmiges Profil auf. Demzufolge erstreckt sich von einem radial inneren Bereich 18 des Trägerkörpers 17 an dessen vorderem Ende ein scheibenförmiger Kragen 19 radial nach außen. Außerdem erstreckt sich von dem radial inneren Bereich 18 des Trägerkörpers 17 an dessen hinterem Ende ein scheibenförmiger Kragen 20 ebenfalls radial nach außen. Der radial innere Bereich 18 ist auf die Hülse 10 gesetzt. Der vordere Kragen 19 grenzt an das Gehäuse 4. Der hintere Kragen 20 grenzt an den Polflansch 13.

Der Polflansch 13 ist radial innen geschlossen ausgeführt, so dass sich ein Boden 21 bildet, der das Polrohr 7 an dessen hinterem Ende verschließt. Dabei ragt ein Anschlag 23 in das Polrohr 7 hinein. In der Grundstellung kommt dieser Anschlag 23 an dem Anker 22 mit seiner hinteren Stirnfläche 58 zum Anliegen. Um den Anschlag 23 bildet sich ein ringförmiger Aufnahmeraum 24 für Hydrauliköl.

Der Anker 22 weist eine zentrale Bohrung 25 auf. Diese zentrale Bohrung 25 ist mit einem Absatz am vorderen Ende des Ankers 22 zu einer Bohrung 26 größeren Durchmessers erweitert. In diese größere Bohrung 26 ist eine Antiklebscheibe 27 eingesetzt, die eine exzentrisch zur Längsachse 8 angeordnete kleine Öffnung 28 aufweist. Diese kleine Öffnung 28 hat die Funktion einer Drosselblende.

Der Bereich der Antiklebscheibe 27, welcher ein Kleben des Ankers 22 an der magnetisch leitenden Hydraulikbuchse 29 des Hydraulikteils 2 bei dem in Fig. 3 dargestellten voll ausgerücktem Anker 22 verhindern soll, ist als Scheibe 32 ausgeführt. Diese Scheibe 32 erstreckt sich von einem radial innen liegenden Anlagebereich 31 für einen Stößel 30. Die magnetisch leitende Hydraulikbuchse 29 bildet damit gemeinsam mit dem zum Polkernkonus 6 führenden Ringsteg 33 einen Polkern 5.

Der magnetische Fluss, der bei bestromter Spule 14 den Anker 22 in die axial auf den Polkern 5 weisende Richtung zieht, verläuft aufeinander folgend
- vom Anker 22 auf
- das Polrohr 7 mit dem Polrohrkonus 9,
- den flanschförmigen Polflansch 13,
- eine Außenhülle 34 des Gehäuses 4,
- einen radial nach innen gerichteten Gehäuseteil 35,
- den Ringsteg 33,
- den Polkernkonus 6 und wieder
- auf den Anker 22.

Dabei wirkt der Ringsteg 33 mit dem Polkernkonus 6 und einem Zapfen 36 der in den Ringsteg 33 eingesteckten Hydraulikbuchse 29 als gemeinsamer Polkern 5. Demzufolge wird mit einer sehr hohen Axialkraft am Anker 22 gezogen, die relativ linear wirkt, da der Anker 22 in seiner Grundstellung gemäß Fig. 1 bereits um das Maß a = 0,2 mm in den Polkernkonus eingetaucht ist. Bei dem in Fig. 3 dargestellten Anliegen der Antiklebscheibe 27 an der Hydraulikbuchse 29 hat die vordere Stirnfläche 37 des Ankers 22 die axiale Konuslänge b des Polkernkonus 6 noch nicht überschritten.

Damit ist trotz der hohen Axialkraft des Ankers 22 gewährleistet, dass der gesamte Ankerhub 65 von der Grundstellung gemäß Fig. 1 über eine Regelstellung gemäß Fig. 2 bis zum Anliegen der Antiklebscheibe 27 gemäß Fig. 3 einen linearen Kraft/Weg-Verlauf aufweist.

Die vom Anker 22 auf das Polrohr wirkenden Querkräfte sind äußerst gering. Dies wird durch die Kombination mehrerer Konstruktionsdetails erreicht. So ist zum einen der Anker 22 zur magnetischen Trennung vom Polrohr 7 mit einer chemisch aufgetragenen Trennschicht 57 getrennt. Diese Trennschicht 57 ist eine sogenannte chemische Vernickelung. Diese Trennschicht 57 weist eine Dicke von 0,045 mm auf.

Somit wird der Anker 22 zur Herstellung der Trennschicht 57 vor dem Einbau in ein Bad gehalten und insbesondere im Bereich der Mantelfläche 80 und der hinteren Stirnfläche 58 des Ankers 22 chemisch vernickelt. Um eine gleichmäßige lückenfreie Trennschicht 57 zu bilden, kann ein Halter den Anker 22 im chemischen Bad halten. Dieser Anker 22 kann innerhalb der zentralen Bohrung 25 und/oder an der vorderen Stirnflächen 37 gehalten werden, so dass es an dieser Stelle zu keiner oder nur einer minderwertigen Vernickelung kommen kann. In der zentralen Bohrung 25 und an der vorderen Stirnflächen 37 braucht die Trennschicht 57 ebenfalls nicht vorhanden sein. Es wäre aber auch möglich, auf die Trennschicht 57 an dem radial Bereich der hinteren Stirnfläche 58 zu verzichten, der ohnehin nie mit dem Boden des Polrohrs 7 in Kontakt kommt.

Zwar werden durch die hier beschriebene Minimierung der Anzahl von Bauteilen im magnetischen Fluss zwecks Herstellung einer bestmöglichen Koaxialität zwischen dem Polkernkonus 6 und dem Polrohr 7 die Koaxialitätsfehler sehr gering gehalten. Jedoch ist auch bei dieser Konstruktion der Innendurchmesser des Polkernkonus 6 geringfügig größer als der Innendurchmesser des Polrohrs 7. Damit wird zusätzlich zur Trennschicht 57 ein Anker 22 vom Polkernkonus 6 trennender ringförmiger Luftspalt erzeugt.

Die zentrische Anordnung der Bohrung 25 im Anker 22 ist eine weitere Maßnahme zur Minimierung der magnetischen Querkräfte. Wäre die dem Volumenausgleich zwischen dem Aufnahmeraum 24 und einem Raum 39 vor dem Anker 22 dienende Bohrung 25 nicht zentrisch, käme es zu inhomogen durch den Anker 22 laufenden Magnetfeldlinien mit zwangsläufig entstehenden Querkräften. Der Volumenausgleich ist notwendig, wenn der Anker 22 verschoben wird und damit die Volumina von Aufnahmeraum 24 und Raum 39 verändert werden.

Auch der den Polkern 5 mitbildende Zapfen 36 der Hydraulikbuchse 29 ist analog dem Anker 22 rotationssymmetrisch. Um dennoch einen Volumenausgleich infolge des in den Raum 39 eintauchenden und wieder heraustretenden Stößels 30 zu ermöglichen, ist eine Bohrung 40 zur Durchführung des Stößels 30 so weit erweitert, dass sich ein ausreichend großer Ringraum 41 für den strömungsverlustfreien Durchtritt von Hydrauliköl bildet. Von diesem Ringraum 41 geht eine Querbohrung 42 aus, die das Hydrauliköl aus der Hydraulikbuchse 29 heraus bzw. in diese herein führt. Diese Querbohrung 42 ist außerhalb des Polkerns 5 angeordnet, so dass sie das Magnetfeld nicht unsymmetrisch belasten kann und somit Querkräfte gering gehalten werden.

Bei der Montage wird infolge der Bördelung des Gehäuses 4 um den Polflansch 13 der Polflansch 13 axial und radial gegen das Gehäuse 4 gespannt. Da der Anker 22 ausschließlich in dem Polrohr 7 geführt ist, wird somit auch der Anker 22 gegen das Gehäuse 4 bzw. den einteilig mit diesem Gehäuse 4 ausgeführten Polkernkonus 6 ausgerichtet. Diese Koaxialität zwischen dem Polkernkonus 6 und dem Anker 22 bestimmt maßgeblich die Querkräfte. Dabei sind die Kräfte bei der Bördelung sehr groß. Im Vergleich dazu ist die Dicke der Hülse 10 sehr gering.

Mittels der Hülse 10 erfolgt somit keine bzw. eine von der Größenordnung zu vernachlässigende Zentrierung des Polkernkonus 6 gegenüber dem Polrohr 7. Die Funktion der Hülse 10 ist es stattdessen, Lufteinschlüsse im Hydrauliköl innerhalb des Elektromagnetteils 3 zu minimieren. Solche Lufteinschlüsse könnten nämlich ansonsten die hydraulische Dämpfung beim hin und her Schieben des Ankers 22 negativ beeinflussen. Die Hülse 10 dichtet
- den Raum 29 und
- einen Ringraum 43 axial zwischen dem Polkernkonus 6 und einem Polrohrkonus 9 zwar nur sehr unzureichend gegen ein Durchfließen von Hydrauliköl ab. Jedoch verhindert die Hülse, dass sich bei Erstbefüllung des Elektromagnetteils 3 mit Hydrauliköl durch die Querbohrung 42 Luft innerhalb der Hülse 10 sammeln kann. Solche Luft ist nämlich um den Trägerkörper 17 herum eingeschlossen und wird mittels der Hülse 10 außen gehalten. Damit kann auch die Erstprüfung des Getriebeventils 1 mit realistischen Umgebungsbedingungen durchgeführt werden.

Der Hydraulikteil 2 weist einen Hydraulikkolben 50 auf, der einteilig mit dem Stößel 30 ausgeführt ist. Der Hydraulikkolben 50 ist axial verschiebbar innerhalb der Hydraulikbuchse 29 geführt. Dabei ist der Hydraulikkolben 50 gegen die Kraft einer Schraubendruckfeder 51 verschiebbar. Der Hydraulikkolben 50 weist zwei umlaufende Ringnuten 52, 53 auf. Mittels der hinteren Ringnut 52 ist ein Versorgungsdruck eines Versorgungsanschlusses P auf einen Arbeitsanschluss A führbar, wenn sich der Hydraulikkolben 50 in der in Fig. 3 dargestellten maximal gegen die Kraft der Schraubendruckfeder 51 verschobenen Stellung befindet.

Befindet sich der Hydraulikkolben 50 jedoch mangels Anlegen einer ausreichend großen Spannung an die Spule 14 in der Grundstellung gemäß Fig. 1, so wird das Hydrauliköl vom Arbeitsanschluss A auf dem Tankabfluss T geführt.

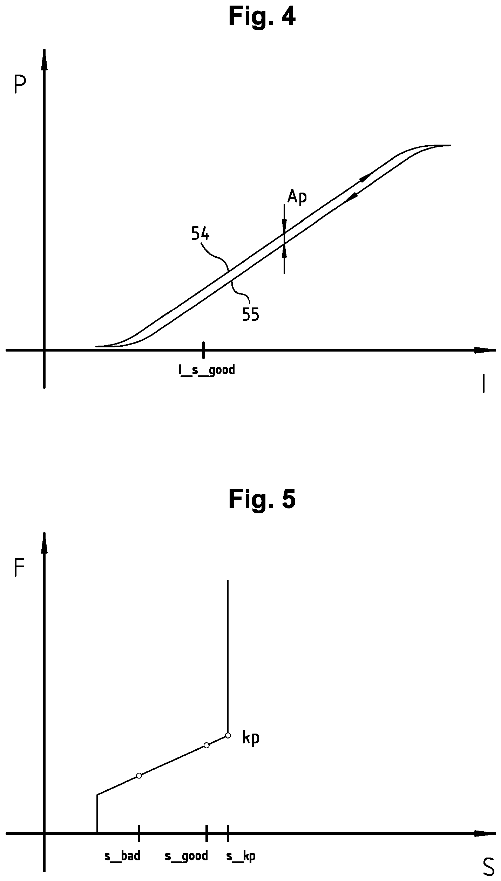

Fig. 4 zeigt für das Getriebeventil 1 gemäß Fig. 1 bis Fig. 3 den hydraulischen Druck p am Arbeitsanschluss A über die durch die Spule 14 fließende Stromstärke I aufgetragen. Dabei bildet sich eine Hystereseschleife. Je nach Bewegungsrichtung des Hydraulikkolbens 50 wird entlang von zwei nahezu parallelen Geraden 54, 55 der Hystereseschleife verfahren. Der Abstand der beiden Geraden 54, 55 in Ordinatenrichtung wird als Hysterese Δp bezeichnet. Diese Hysterese Δp wird bestimmt durch drei Größen:
1.) Der Strömungskraft der beiden Hydraulikflüsse, die neben der Art des Hydrauliköls auch von dessen Temperatur bzw. Viskosität abhängt.
2.) Der magnetischen Hysterese, die vom gewählten Material abhängt.
3.) Den Reibungen, die neben dem Reibungskoeffizienten bzw.

Materialpaarungen maßgeblich von den besagten Querkräften abhängen. Die Schraubendruckfeder 51 spielt im Gegensatz zu den vorgenannten Größen infolge der sehr geringen Federkraft nur untergeordnete Rolle.

Je geringer die Hysterese Δp ist bzw. je geringer die beiden Geraden 54, 55 in Ordinatenrichtung voneinander beabstandet sind, desto besser lässt sich das Getriebeventil 1 an einem bestimmten Punkt einregeln.

Das ist bei dem bevorzugten Anwendungszweck des Getriebeventils 1 von Vorteil. Dabei handelt es sich um die Steuerung von reibschlüssigen Kupplungen. Insbesondere Lamellenkupplungen weisen einen ausgeprägten Kisspoint kp auf, wie dies das folgend erläuterte Diagramm gemäß Fig. 5 darstellt.

Dazu zeigt dieses Diagramm die auf ein hydraulisches Stellglied der Lamellenkupplung wirkende Kraft F der Lamellenkupplung über den Weg s der Lamellenkupplung aufgetragen. Von dieser Kraft F hängt das von der Lamellenkupplung übertragbare Drehmoment direkt ab. Die Lamellenkupplung besteht aus zwei Lamellenpaketen. Ein Lamellenpaket sind die Außenlamellen. Das andere Lamellenpaket sind die Innenlamellen. Die Außenlamellen sind mit deren Außendurchmesser axialverschieblich und drehfest an der einen zu koppelnden Getriebewelle des Getriebes aufgehängt. Die Innenlamellen sind mit deren Innendurchmesser axialverschieblich und drehfest an der anderen zu koppelnden Getriebewelle aufgehängt. Die Lamellen eines Lamellenpaketes oder beider Lamellenpakete sind mittels Federn voneinander getrennt. Diese Federn können beispielsweise als Tellerfedern oder als Schraubendruckfedern ausgeführt sein. Die Lamellen der Lamellenkupplung haben eine geringe Welligkeit.

Leitet das Getriebeventil 1 den Versorgungsdruck vom Versorgungsanschluss P über den Arbeitsanschluss A auf eine Druckkammer des hydraulischen Stellgliedes der Lamellenkupplung, so steigt der Druck in der Druckkammer schlagartig an, bis die Vorspannung der Federn überwunden ist. Aus dem Druck ergibt sich über die Fläche des hydraulischen Stellgliedes die Kraft F. Diese Kraft F nimmt über einen Weg Δs1 linear ansteigend zu. Wird der sogenannte Kisspoint kp erreicht, so kommen die Außenlamellen und Innenlamellen direkt aneinander zum Anliegen. Die Kraft F nimmt demzufolge schlagartig zu. Damit der Fahrzeuginsasse keine Komforteinbußen spürt, muss die Regelung an diesem Kisspoint kp sehr hochwertig sein. Das ist jedoch - wie zuvor zu Fig. 4 gezeigt - nur möglich, wenn die Hysterese Δp gering ist. Für eine typische Anwendung einer Lamellenkupplung hat sich eine Hysterese Δp < 0,5 bar als komfortabel erwiesen.

Das Getriebeventil 1 mit einer solch guten bzw. geringen Hysterese Δp ermöglicht es nämlich, die beiden Lamellenpakete sehr schnell über den Weg s_good zu verfahren und im Anschluss langsam bis zum Punkt s_kp einzuregeln. Ein schlechteres Getriebeventil wäre nur über den Weg s_bad zu verfahren, so dass noch ein sehr langer Weg bis zur Erreichung des Kisspoints zu verfahren wäre.

Das dargestellte Getriebeventil 1 weist eine hohe Robustheit auf. Das heißt, dass Schmutzpartikel im Hydrauliköl nicht zum Verklemmen des Getriebeventils 1 kommen können, da die Axialkräfte so groß sind, dass sich der Anker 22 stets frei reißen kann. Dies bei der hier angegebenen Trennschichtdicke und den Materialpaarungen der Fall, wenn der Anker 22 eine Kraft von mindestens 15 N bei einer Stromstärke von I = 1 A entwickelt.

Das Getriebeventil 1 ist demzufolge insbesondere zur Druckregelung einer Doppelkupplung eines Doppelkupplungsgetriebes oder der Lamellenkupplung eines Planetenautomatikgetriebes geeignet.

Im Gegensatz zu dem Druckregelventil gemäß Fig. 1 bis Fig. 3 handelt es sich beim Getriebeventil 101 gemäß Fig. 6 um ein Volumenstromregelventil. Dieses Volumenstromregelventil ist für das Einlegen und Auslegen der Gänge vorgesehen. Insbesondere wenn die Gänge mit Synchronringen versehen sind, gelten ähnliche Randbedingungen, wie sie zuvor zu Fig. 4 und Fig. 5 gemacht wurden. Auch bei Synchronringen gibt es nämlich eine aus Komfortgründen feinfühlig zu regelnde Reibmomentübertragung, bevor die Verzahnungen der Synchronisierung in Eingriff gehen.

Das Getriebeventil 101 weist jedoch zwei Arbeitsanschlüsse A und B auf. Überdies weist das Getriebeventil 101 auch zwei Tankabflüsse T1 und T2 auf.

Ein Hydraulikkolben 150 weist zwei umlaufende Ringnuten 152, 153, 154 auf. Mittels der mittleren Ringnut 152 ist ein Volumenstrom eines axial zwischen den beiden Arbeitsanschlüssen A, B angeordneten Versorgungsanschlusses P auf den hinteren Arbeitsanschluss B führbar, wenn sich der Hydraulikkolben 150 in der in Fig. 6 dargestellten Grundstellung bei unbestromter Spule 114 befindet. Der vordere Arbeitsanschluss A wird in dieser Grundstellung über die vordere Ringnut 154 auf den hinteren Tankabfluss T2 geführt.

Wird jedoch eine ausreichend große Spannung an die Spule 14 angelegt, so befindet sich der Hydraulikkolben 150 in der gegen die Federkraft der Schraubendruckfeder 151 maximal ausgerückten Stellung gemäß Fig. 8. In dieser maximal ausgerückten Stellung wird das Hydrauliköl vom Versorgungsanschluss P auf den vorderen Arbeitsanschluss B geführt. Der hintere Arbeitsanschluss B wird im Gegenzug über die hintere Ringnut 152 auf den vorderen Tankabfluss T1 geführt.

Zwischen diesen beiden Extremstellungen gemäß Fig. 6 und Fig. 8 befindet sich die Regelstellung gemäß Fig. 7.

Die hydraulischen Getriebeventile müssen nicht in einem Doppelkupplungsgetriebe Anwendung finden. Es ist auch möglich, die Getriebeventile in einem Planetenautomatikgetriebe zu verwenden.

Der Anker 22 ist als Drehteil ausgeführt. Es ist auch möglich, den Anker 22 als Sinterteil auszuführen.

Im Bereich der Verbindung 62 weist das Gehäuse 4 eine Materialschwächung auf, um die Verbördelung zu ermöglichen, ohne dass zu große Kräfte ins Gehäuse 4 eingeleitet werden und die koaxiale Ausrichtung des Polrohrs 7 gegenüber dem Polkernkonus negativ beeinflussen könnten. Dazu ist das Gehäuse 4 im Bereich der Verbindung 62 dünner ausgeführt, als im übrigen Bereich. Anstelle der dünnen Wanddicke an dieser Verbindung 62 können alternativ auch umfangsmäßig Schlitze ausgenommen sein, so dass vom Gehäuse Zungen verbleiben, die sich zur Herstellung der Verbindung 62 leichter verbiegen lassen.

Außer den dargestellten Verbindungen sind auch andere Verbindungen machbar. Beispielsweise sind Verschraubungen machbar, die den Polflansch gegen das Gehäuse drücken.

In einer alternativen Ausgestaltung sind in die dünne Trennschicht PTFE-Teilchen eingelegt.

Je nach Ausführungsform der Trennschicht, ist es auch möglich, auf die Antiklebscheibe zu verzichten. Die chemische Vernickelung bietet sich dafür jedoch nicht an, da lokal an dieser vorderen Stirnfläche eine Schichtdicke von 0,9 mm notwendig wäre. Zum einen entstehen jedoch bei chemisch vernickelten Trennschichten größer als 0,05 mm Spannungen. Zum anderen steigt mit der Schichtdicke die Herstellungszeit der Trennschicht nichtlinear an. Andere - insbesondere nicht galvanische - Trennschichten sind jedoch denkbar. Das wäre beispielsweise ein Gleitlack.

In einer alternativen Ausgestaltung ist die dünne Trennschicht nicht auf den Anker, sondern innen auf das Polrohr aufgetragen.

Die aus nicht magnetisierbarem Metall bestehende Antiklebscheibe kann insbesondere aus einem austenitischen Stahl bestehen. Diese Antiklebscheibe kann jedoch auch aus einem anderen nicht magnetisierbaren Material, wie beispielsweise Messing, hergestellt sein. Auch kann ein Kunststoff verwendet werden.

Anstelle einer Lamellenkupplung kann auch eine Trockenkupplung vorgesehen sein.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Hydraulisches Getriebeventil (1) mit einem magnetisierbaren Gehäuse (4) und mit einem Polrohr (7), welches einteilig mit einem magnetisierbaren, sich in Bezug auf eine Längsachse (8) des Getriebeventils (1) radial nach außen erstreckenden Polflansch (13) verbunden ist, wobei das Gehäuse (4) einteilig mit einem Polkernkonus (6) ausgeformt ist, wobei vom Gehäuse (4) zu dem Polkernkonus (6) ein Ringsteg (33) führt, welcher sich koaxial zu der Längsachse (8) des Getriebeventils (1) vom Gehäuse (4) in eine auf die Mitte eines Elektromagnetteils (3) des Getriebeventils (1) weisende Richtung erstreckt und im Polkernkonus (6) endet, wobei das Gehäuse (4) eine Verbindung (62) zur Festlegung eines Ankerhubs (65) eines im Polrohr (7) geführten Ankers (22) und einer Konzentrizität zwischen dem Polkernkonus (6) und dem Polrohr (7) mit einer axialen Passung (61) und einer radialen Passung (60) aufweist, wobei zur Festlegung des Ankerhubs (65) des Ankers (22) und der Konzentrizität zwischen dem Polkernkonus (6) und dem Polrohr (7) mit dem Polflansch (13) mittels der in Bezug auf die Längsachse (8) des Getriebeventils (1) axialen Passung (61) und der in Bezug auf eine Längsachse (8) des Getriebeventils (1) radialen Passung (60) verbunden ist, wobei der Polflansch (13) zur axialen Passung (61) eine Stirnfläche (63) aufweist, die an einer senkrecht zu der Längsachse (8) des Getriebeventils (1) ausgerichteten Anlagefläche (64) einer Außenhülle (34) des Gehäuses (4) anliegt, wobei der Polflansch (13) zur radialen Passung (60) eine Mantelfläche (66) aufweist, mit der dieser Polflansch (13) in eine zylindrische Ausnehmung (67) des Gehäuses (4) eingesetzt ist wobei der ausschließlich im Polrohr (7) geführte Anker (22) mittels einer Trennschicht (57) in einer Dicke von 0,01 mm bis 0,06 mm vom Polrohr (7) magnetisch getrennt ist.

2. Hydraulisches Getriebeventil nach Patentanspruch 1, wobei eine Spule (14) in Bezug auf die Längsachse (8) des Getriebeventils (1) radial außerhalb einer nicht magnetisierbaren Hülse (10) angeordnet ist, wobei diese Hülse (10) einerseits auf einen Ringsteg (33) des Polkernkonus (6) und andererseits auf das Polrohr (7) gesetzt ist, so dass ein Bauraum der Spule (14) von einem zur Dämpfung mit Hydrauliköl gefüllten Ankerraum innerhalb der Hülse (10) getrennt ist, wobei der Anker (22) innerhalb des Ankerraums axial verschieblich angeordnet ist.

3. Hydraulisches Getriebeventil nach Patentanspruch 1, wobei das Gehäuse (4) um den Polflansch (13) herum gebördelt ist.

4. Hydraulisches Getriebeventil nach Patentanspruch 1 wobei der Polflansch (13) Ausnehmungen (15) aufweist, durch welche elektrisch Leitungen (16) zum Anlegen einer Spannung an eine Spule (14) geführt sind, wobei diese Spule (14) radial innen vom einem Trägerkörper (17) aus Kunststoff begrenzt wird, der einerseits im Bereich des Polkernkonus (6) und andererseits im Bereich des Polrohrs (7) koaxial auf das Polrohr (7) und den Ringsteg (33) gesetzt ist.

5. Hydraulisches Getriebeventil nach Patentanspruch 1, wobei die Trennschicht (57) auf den Anker (22) aufgetragen ist.

6. Hydraulisches Getriebeventil nach Patentanspruch 1, wobei die Trennschicht (57) eine chemische Vernickelung ist.

7. Hydraulisches Getriebeventil nach einem der Patentansprüche 1 bis 6, wobei die Trennschicht eine galvanisch aufgetragene Schicht ist.

8. Hydraulisches Getriebeventil nach Patentanspruch 1, wobei das Polrohr (7) an dem dem Polkernkonus (6) zugewandten Ende einen Polrohrkonus (9) aufweist.

9. Hydraulisches Getriebeventil nach Patentanspruch 1, wobei der Anker (22) eine zentrale Bohrung (25) aufweist.

10. Hydraulisches Getriebeventil nach Patentanspruch 1, wobei der Anker (22) zur Verhinderung von Querkräften an seiner Mantelfläche (66) und zur Verhinderung des magnetischen Klebens an seiner einem magnetisierbaren Boden (21) des Polrohrs (7) zugewandten Stirnfläche (58) die Trennschicht (57) aufweist.

11. Hydraulisches Getriebeventil nach Patentanspruch 1, wobei das Getriebeventil (1) eine magnetisierbare Hydraulikbuchse (29) aufweist, die in den Ringsteg (33) eingesteckt ist.

12. Hydraulisches Getriebeventil nach Patentanspruch 1, wobei das Gehäuse (4) zur Verbindung mit dem Polflansch (13) im Bereich des Polflansches (13) eine dünnere Wanddicke als im Bereich einer Spule (14, 114) aufweist.

13. Hydraulisches Getriebeventil nach Patentanspruch 1, wobei das Gehäuse (4) zur Verbindung mit dem Polflansch (13) im Bereich des Polflansches (13) umfangsmäßig durch Schlitze gebildete Zungen aufweist.

14. Hydraulisches Getriebeventil nach Patentanspruch 1, wobei ein Innendurchmesser des Polkernkonus (6) größer als der Innendurchmesser des Polrohrs (7) ist.

## Claims

1. Hydraulic transmission valve (1) with a magnetizable housing (4) and with a pole tube (7) which is connected in one piece to a magnetizable pole flange (13) which extends radially to the outside in relation to a longitudinal axis (8) of the transmission valve (1), the housing (4) being formed in one piece with a pole core cone (6), an annular web (33) leading from the housing (4) to the pole core cone (6), which annular web (33) extends coaxially with respect to the longitudinal axis (8) of the transmission valve (1) from the housing (4) in a direction which points towards the centre of an electromagnet part (3) of the transmission valve (1), and ends in the pole core cone (6), the housing (4) having a connection (62) for fixing an armature stroke (65) of an armature (22) which is guided in the pole tube (7) and for fixing a concentricity between the pole core cone (6) and the pole tube (7) with an axial fit (61) and a radial fit (60), being connected to the pole flange (13) by means of the axial fit (61) in relation to the longitudinal axis (8) of the transmission valve (1) and the radial fit (60) in relation to a longitudinal axis (8) of the transmission valve (1) in order to fix the armature stroke (65) of the armature (22) and the concentricity between the pole core cone (6) and the pole tube (7), the pole flange (13) having an end face (63) for the axial fit (61), which end face (63) bears against a bearing face (64) of an outer shell (34) of the housing (4), which bearing face (64) is oriented perpendicularly with respect to the longitudinal axis (8) of the transmission valve (1), the pole flange (13) having a circumferential face (66) for the radial fit (60), by way of which circumferential face (66) the said pole flange (13) is inserted into a cylindrical recess (67) of the housing (4), the armature (22) which is guided exclusively in the pole tube (7) being separated magnetically by means of a separating layer (57) with a thickness of from 0.01 mm to 0.06 mm.

2. Hydraulic transmission valve according to Patent Claim 1, a coil (14) being arranged radially outside a non-magnetizable sleeve (10) in relation to the longitudinal axis (8) of the transmission valve (1), the said sleeve (10) being placed firstly onto an annular web (33) of the pole core cone (6) and secondly onto the pole tube (7), with the result that an installation space of the coil (14) is separated within the sleeve (10) from an armature space which is filled with hydraulic oil for damping purposes, the armature (22) being arranged in an axially displaceable manner within the armature space.

3. Hydraulic transmission valve according to Patent Claim 1, the housing (4) being beaded around the pole flange (13).

4. Hydraulic transmission valve according to Patent Claim 1, the pole flange (13) having recesses (15), through which lines (16) for applying a voltage to a coil (14) are guided electrically, the said coil (14) being delimited radially on the inside by a carrier body (17) which is made from plastic and is placed coaxially onto the pole tube (7) and the annular web (33) firstly in the region of the pole core cone (6) and secondly in the region of the pole tube (7).

5. Hydraulic transmission valve according to Patent Claim 1, the separating layer (57) being applied to the armature (22).

6. Hydraulic transmission valve according to Patent Claim 1, the separating layer (57) being a chemical nickel plating layer.

7. Hydraulic transmission valve according to one of Patent Claims 1 to 6, the separating layer being a galvanically applied layer.

8. Hydraulic transmission valve according to Patent Claim 1, the pole tube (7) having a pole tube cone (9) at the end which faces the pole core cone (6).

9. Hydraulic transmission valve according to Patent Claim 1, the armature (22) having a central bore (25).

10. Hydraulic transmission valve according to Patent Claim 1, the armature (22) having the separating layer (57) on its circumferential face (66) in order to prevent transverse forces and on its end face (58) which faces a magnetizable bottom (21) of the pole tube (7) in order to prevent the magnetic adhesion.

11. Hydraulic transmission valve according to Patent Claim 1, the transmission valve (1) having a magnetizable hydraulic bush (29) which is plugged into the annular web (33) .

12. Hydraulic transmission valve according to Patent Claim 1, the housing (4) having a thinner wall thickness in the region of the pole flange (13) than in the region of a coil (14, 114) for the connection to the pole flange (13).

13. Hydraulic transmission valve according to Patent Claim 1, the housing (4) having tongues which are formed circumferentially by way of slots in the region of the pole flange (13) for the connection to the pole flange (13) .

14. Hydraulic transmission valve according to Patent Claim 1, an internal diameter of the pole core cone (6) being greater than the internal diameter of the pole tube (7) .

## Revendications

1. Soupape hydraulique pour transmissions (1), comprenant un boîtier magnétisable (4) et un tube polaire (7) qui est connecté d'une seule pièce à une bride polaire magnétisable (13) s'étendant radialement vers l'extérieur par rapport à un axe longitudinal (8) de la soupape pour transmissions (1), le boîtier (4) étant formé d'une seule pièce avec un cône de noyau polaire (6), une nervure annulaire (33) conduisant du boîtier (4) jusqu'au cône de noyau polaire (6), laquelle s'étend coaxialement par rapport à l'axe longitudinal (8) de la soupape pour transmissions (1) depuis le boîtier (4) dans une direction orientée vers le centre d'une pièce d'électroaimant (3) de la soupape pour transmissions (1) et se termine dans le cône de noyau polaire (6), le boîtier (4) présentant une connexion (62) pour l'établissement d'une course d'induit (65) d'un induit (22) guidé dans le tube polaire (7) et d'une concentricité entre le cône de noyau polaire (6) et le tube polaire (7) avec un ajustement axial (61) et un ajustement radial (60), pour l'établissement de la course d'induit (65) de l'induit (22) et de la concentricité entre le cône de noyau polaire (6) et le tube polaire (7) étant connecté à la bride polaire (13) au moyen de l'ajustement axial (61) par rapport à l'axe longitudinal (8) de la soupape pour transmissions (1) et de l'ajustement radial (60) par rapport à un axe longitudinal (8) de la soupape pour transmissions (1), la bride polaire (13), pour l'ajustement axial (61), présentant une surface frontale (63) qui s'applique contre une surface d'appui (64) d'une enveloppe extérieure (34) du boîtier (4) orientée perpendiculairement à l'axe longitudinal (8) de la soupape pour transmissions (1), la bride polaire (13), pour l'ajustement radial (60), présentant une surface d'enveloppe (66) avec laquelle cette bride polaire (13) est insérée dans un évidement cylindrique (67) du boîtier (4), l'induit (22) guidé exclusivement dans le tube polaire (7) étant séparé magnétiquement du tube polaire (7) au moyen d'une couche de séparation (57) ayant une épaisseur de 0,01 mm à 0,06 mm.

2. Soupape hydraulique pour transmissions selon la revendication 1, dans laquelle une bobine (14) est disposée par rapport à l'axe longitudinal (8) de la soupape pour transmissions (1) radialement à l'extérieur d'une douille non magnétisable (10), cette douille (10) étant placée d'une part sur une nervure annulaire (33) du cône de noyau polaire (6) et d'autre part sur le tube polaire (7), de telle sorte qu'un espace de construction de la bobine (14) soit séparé d'un espace d'induit à l'intérieur de la douille (10), rempli d'huile hydraulique en vue de l'amortissement, l'induit (22) étant disposé de manière déplaçable axialement à l'intérieur de l'espace d'induit.

3. Soupape hydraulique pour transmissions selon la revendication 1, dans laquelle le boîtier (4) est bordé autour de la bride polaire (13).

4. Soupape hydraulique pour transmissions selon la revendication 1, dans laquelle la bride polaire (13) présente des évidements (15) à travers lesquels sont guidées des lignes électriques (16) pour l'application d'une tension à une bobine (14), cette bobine (14) étant limitée radialement à l'intérieur par un corps de support (17) en plastique qui est placé d'une part dans la région du cône de noyau polaire (6) et d'autre part dans la région du tube polaire (7) coaxialement sur le tube polaire (7) et la nervure annulaire (33).

5. Soupape hydraulique pour transmissions selon la revendication 1, dans laquelle la couche de séparation (57) est appliquée sur l'induit (22).

6. Soupape hydraulique pour transmissions selon la revendication 1, dans laquelle la couche de séparation (57) est un plaquage chimique au nickel.

7. Soupape hydraulique pour transmissions selon l'une quelconque des revendications 1 à 6, dans laquelle la couche de séparation est une couche appliquée par galvanisation.

8. Soupape hydraulique pour transmissions selon la revendication 1, dans laquelle le tube polaire (7) présente un cône de tube polaire (9) à l'extrémité tournée vers le cône de noyau polaire (6).

9. Soupape hydraulique pour transmissions selon la revendication 1, dans laquelle l'induit (22) présente un alésage central (25).

10. Soupape hydraulique pour transmissions selon la revendication 1, dans laquelle l'induit (22), pour empêcher l'application de forces transversales sur sa surface d'enveloppe (66) et pour empêcher le collage magnétique au niveau de sa surface frontale (58) tournée vers un fond magnétisable (21) du tube polaire (7), présente la couche de séparation (57).

11. Soupape hydraulique pour transmissions selon la revendication 1, la soupape pour transmissions (1) présentant un manchon hydraulique magnétisable (29) qui est enfiché dans la nervure annulaire (33) .

12. Soupape hydraulique pour transmissions selon la revendication 1, dans laquelle le boîtier (4), pour la connexion à la bride polaire (13), présente dans la région de la bride polaire (13), une épaisseur de paroi plus mince que dans la région d'une bobine (14, 114).

13. Soupape hydraulique pour transmissions selon la revendication 1, dans laquelle le boîtier (4), pour la connexion à la bride polaire (13), présente, dans la région de la bride polaire (13) des langues formées par des fentes sur la périphérie.

14. Soupape hydraulique pour transmissions selon la revendication 1, dans laquelle un diamètre intérieur du cône de noyau polaire (6) est supérieur au diamètre intérieur du tube polaire (7) .
